# EUROPEAN PATENT SPECIFICATION

(11) **EP 2 692 792 B1**
(45) Date of publication and mention of the grant of the patent: **16.12.2015**
(21) Application number: 12763621.5
(22) Date of filing: 30.03.2012
(51) Int. Cl.: C08L 21/00, C08J 5/18, C08K 3/22, C08K 5/053, C08K 5/16, C08K 5/49, C08K 5/315, C08K 5/3492, C08L 23/22, C08K 3/02, C08K 5/31, B32B 15/00

(54) **HIGHLY REFRACTORY RUBBER COMPOSITION SHEET**
IN HOHEM MASSE FEUERFESTE KAUTSCHUKVERBUNDFOLIE
FEUILLE DE COMPOSITION CAOUTCHOUTEUSE HAUTEMENT RÉFRACTAIRE

(30) Priority: 31.03.2011 JP 2011081320
(43) Date of publication of application: 05.02.2014
(73) Proprietor: Sekisui Chemical Co., Ltd., Osaka 530-8565 (JP)
(72) Inventor: MIYATA, Shingo, Hasuda-shi, Saitama 349-0198 (JP); YANO, Hideaki, Hasuda-shi, Saitama 349-0198 (JP); OKADA, Kazuhiro, Hasuda-shi, Saitama 349-0198 (JP)
(74) Representative: Ter Meer Steinmeister & Partner
(86) International application number: PCT/JP2012/002254
(87) International publication number: WO 2012/132475

(56) References cited:
- JP-A- 9 053 075
- JP-A- 2001 322 195
- JP-A- 2002 012 776
- JP-A- 2002 194 225
- JP-A- 2002 225 200
- JP-A- 2002 322 374
- JP-A- 2005 255 921
- JP-A- 2011 052 192

## Description

### TECHNICAL FIELD

The present invention relates to a highly refractory rubber composition sheet, more specifically to a highly refractory rubber composition sheet to be used for refractory coating, etc., of building materials.

### BACKGROUND ART

As a material to heighten fire resistance ability of building materials such as a steel frame, an outer wall, a partition, a fire shutter, a refractory duct, etc., a refractory coating has been known (Patent Document 1).

By coating the above-mentioned refractory coating onto a steel frame, etc., when the above-mentioned steel frame, etc., is exposed to a flame of a fire, etc., the above-mentioned refractory coating foams to form a heat insulating layer. According to the heat insulating layer, the above-mentioned steel frame, etc., is said to be protected from the flame of the fire, etc.

As the above-mentioned refractory coating, it has been specifically proposed a material comprising (a) a polyhydric alcohol such as pentaerythritol, etc., (b) a nitrogen-containing foaming agent such as dicyandiamide, melamine, etc., (c) a synthetic resin such as an acrylic resin, etc., (d) a flame resistant foaming agent such as ammonium polyphosphate, etc., and (e) titanium dioxide, and the respective components of which are mixed with a weight ratio of (a) : (b) : (c) : (d) : (e)=100:80 to 150:20 to 500:280 to 450:100 to 300.

However, when the above-mentioned refractory coating is coated onto the steel frame, etc., at the construction sites, it is not easy to uniformly coat the above-mentioned refractory coating onto the above-mentioned steel frame, etc., and it sometimes causes a partially thin refractory coating layer on the surface of the steel frame, etc.

If a partially thin refractory coating layer exists on the surface of the steel frame, etc., a thickness of the thermal expansion residue formed by the heat of the fire, etc., is not sufficient, so that there is a problem that the steel frame, etc., cannot sufficiently be protected.

In particular, if a curved surface, a part of corner, etc., exist at the surface of the steel frame, etc., it is difficult to retain the refractory coating layer of these portions to a constant thickness.

Also, for thickening the refractory coating layer, it is necessary to coat the above-mentioned refractory coating onto the above-mentioned steel frame, etc., several times, so that there is a problem that it takes a long time for forming the refractory coating layer with a sufficient thickness onto the steel frame, etc.

On the other hand, it has been proposed a material comprising (a) a polyhydric alcohol such as pentaerythritol, etc., (b) a nitrogen-containing foaming agent such as dicyandiamide, melamine, etc., (c) a synthetic resin such as a styrene block copolymer, etc., (d) a flame resistant foaming agent such as ammonium polyphosphate, etc., and (e) a metal oxide such as titanium dioxide, etc., and the respective components of which are mixed with a weight ratio of (a) : (b) : (c) : (d) : (e)=5 to 90:0.1 to 20:100:10 to 120:20 to 200 (Patent Document 2).

However, when a mixed material of a butyl rubber, a polybutene and a hydrogenated petroleum resin is used as the synthetic resin (c), there is a problem that the thermal expansion residue formed by heat of the fire, etc., is easily broken (Comparative examples 4 and 5 of Patent Document 2).

It has also been proposed a material comprising (a) polyhydric alcohol comprising pentaerythritol, (b) a nitrogen-containing foaming agent comprising melamine, (c) a synthetic resin comprising a one-package modified epoxy resin, (d) a flame resistant foaming agent comprising ammonium polyphosphate and (e) inorganic powder such as titanium dioxide, etc., and the respective components of which are mixed with a weight ratio of (a) : (b) : (c) : (d) : (e) = 25 to 300:25 to 300:100:100 to 600:25 to 200 (Patent Document 3).

However, a viscosity of the one-package modified epoxy resin markedly changes with a lapse of time, so that there is a problem that the handling thereof is difficult.

Also, the resin composition requires the inorganic fibrous substance as an essential constitutional element, and if the inorganic fiber does not exist, there is a problem that the thermal expansion residue formed by heat of the fire, etc., is easily broken (paragraph [0004] of Patent Document 3).

### PRIOR ART REFERENCES

### PATENT DOCUMENTS

Patent Document 1: JP 2001-40290A
Patent Document 2: JP 2003-64261A
Patent Document 3: JP H5-86310A

### SUMMARY OF THE INVENTION

### PROBLEMS TO BE SOLVED BY THE INVENTION

When the present inventors have investigated the above-mentioned prior art, it has been found out that in the resin composition disclosed in the above-mentioned prior art, when the above-mentioned resin composition layer is exposed to the heat of the fire, etc., there is a possibility that the synthetic resin (c) is melted and flown down before a heat insulating layer is formed by expansion.

This tendency is a problem particularly when the above-mentioned synthetic resin (c) is a thermoplastic resin such as a vinyl acetate resin, an acryl-vinyl acetate copolymer resin, an acrylic resin, an acryl-styrene copolymer, a styrene-ethylene·propylene-styrene block copolymer, a styrene-isobutylene-styrene block copolymer, etc.

Also, even when a thermal expansion residue is formed by the above-mentioned resin composition layer being exposed to the heat of the fire, etc., it has been also found out that the above-mentioned thermal expansion residue is formed by a brittle ash content, so that there is a possibility that the thermal expansion residue is easily peeled off or dropped from a steel frame, etc.

Also, it has recently been expected to develop a resin composition layer which can not only shut off the flame of the fire, etc., for a short period of time, but also prevent from the penetration of the fire, etc., for a long time of 2 hours or so.

An object of the present invention is to provide a highly refractory rubber composition sheet, which is easy to mount on building materials such as a steel frame, etc., causes no problem of fluctuation in film thickness at the time of mounting, can retain a certain shape until it forms a thermal expansion residue by heat of the fire, etc. , gives a firm and strong thermal expansion residue formed by heat of the fire, etc., does not easily peeled off from the building materials such as a steel frame, etc., and can prevent from the penetration of the flame for at least 2 hours when it is exposed to the flame of the fire, etc.

### MEANS TO SOLVE THE PROBLEMS

To solve the above-mentioned problems, the present inventors have intensively studied, and as a result, they have found that a highly refractory rubber composition sheet containing (A) a polyhydric alcohol, (B) a nitrogen-containing foaming agent, (C) a rubber substance, (D) a flame resistant foaming agent and (E) titanium dioxide, wherein the above-mentioned nitrogen-containing foaming agent (B) is used in the range of 76 to 80 parts by weight based on 100 parts by weight of the above-mentioned rubber substance (C) is consistent with the objects of the present invention, whereby they have accomplished the present invention.

They have also found out that a highly refractory rubber composition sheet containing (A) a polyhydric alcohol, (B) a nitrogen-containing foaming agent, (C) a rubber substance, (D) a flame resistant foaming agent and (E) titanium dioxide,
wherein the above-mentioned rubber substance (C) comprises at least one selected from the group consisting of a butyl rubber, a polybutene and a petroleum resin,
a total amount of the above-mentioned flame resistant foaming agent (D) and titanium dioxide (E) is in the range of 100 to 240 parts by weight based on 100 parts by weight of the above-mentioned rubber substance (C), and
a weight ratio [(D)/(E)] of the above-mentioned flame resistant foaming agent (D) and titanium dioxide (E) is in the range of 1.5 to 5 is consistent with the objects of the present invention, whereby they have accomplished the present invention.

That is, the present invention is to provide:
[1] a highly refractory rubber composition sheet, which is formed by a highly refractory rubber composition containing (A) a polyhydric alcohol, (B) a nitrogen-containing foaming agent, (C) a rubber substance, (D) a flame resistant foaming agent and (E) titanium dioxide,
   wherein the above-mentioned nitrogen-containing foaming agent (B) is contained in a range of 76 to 80 parts by weight based on 100 parts by weight of the above-mentioned rubber substance (C).
   Also, one of the present inventions is directed to:
[2] the highly refractory rubber composition sheet described in the above-mentioned [1], wherein the above-mentioned rubber substance (C) is at least one selected from the group consisting of a butyl rubber, a polybutene and a petroleum resin.
   Further, one of the present inventions is directed to:
[3] the highly refractory rubber composition sheet described in the above-mentioned [1] or [2], wherein the above-mentioned polyhydric alcohol (A) is contained in a range of 60 to 90 parts by weight based on 100 parts by weight of the above-mentioned rubber substance (C).
   Moreover, one of the present inventions is directed to:
[4] the highly refractory rubber composition sheet described in the above-mentioned any one of [1] to [3], wherein the above-mentioned polyhydric alcohol (A) is at least one selected from the group consisting of pentaerythritol, dipentaerythritol, tripentaerythritol and polypentaerythritol,
   the above-mentioned nitrogen-containing foaming agent (B) is at least one selected from the group consisting of dicyandiamide, azodicarbonamide, urea, guanidine, melamine and a melamine derivative,
   the above-mentioned flame resistant foaming agent (D) is at least one selected from the group consisting of red phosphorus, phosphoric acid salts, phosphoric acid esters and ammonium polyphosphates.
   Further, one of the present inventions is directed to:
[5] the highly refractory rubber composition sheet described in the above-mentioned any one of [1] to [4], wherein the above-mentioned nitrogen-containing foaming agent (B) is dicyandiamide and melamine,
   the above-mentioned dicyandiamide is contained in the range of 10 to 20 parts by weight based on 100 parts by weight of the above-mentioned rubber substance (C), and
   the above-mentioned melamine is contained in the range of 56 to 70 parts by weight based on 100 parts by weight of the above-mentioned rubber substance (C).
   Furthermore, one of the present inventions is directed to:
[6] the highly refractory rubber composition sheet described in the above-mentioned any one of [1] to [5], wherein a total amount of the above-mentioned flame resistant foaming agent (D) and titanium dioxide (E) is within the range of 100 to 240 parts by weight based on 100 parts by weight of the above-mentioned rubber substance (C), and
   a weight ratio [(D)/(E)] of the above-mentioned flame resistant foaming agent (D) and titanium dioxide (E) is in the range of 1.5 to 5.
   Also, one of the present inventions is directed to:
[7] the highly refractory rubber composition sheet described in the above-mentioned any one of [1] to [6], wherein the above-mentioned rubber substance (C) comprises a butyl rubber, a polybutene and a petroleum resin,
   based on the total weight of the above-mentioned butyl rubber, polybutene and petroleum resin as 100 parts by weight,
   the above-mentioned butyl rubber is in the range of 15 to 65 parts by weight,
   the above-mentioned polybutene is in the range of 20 to 80 parts by weight, and
   the above-mentioned petroleum resin is in the range of 5 to 15 parts by weight.
   Moreover, one of the present inventions is directed to:
[8] the highly refractory rubber composition sheet described in the above-mentioned any one of [1] to [7], wherein the above-mentioned highly refractory rubber composition contains at least one selected from the group consisting of an inorganic filler, a plasticizer, an antioxidant, a metal damage preventing agent, an antistatic agent, a stabilizer, a cross-linking agent, a lubricant, a processing aid, a softening agent and a pigment.
   Further, one of the present inventions is directed to:
[9] the highly refractory rubber composition sheet described in the above-mentioned any one of [1] to [8], wherein at least one selected from the group consisting of an organic material layer, an inorganic material layer and a metal layer is laminated on the highly refractory rubber composition layer formed by the above-mentioned highly refractory rubber composition.
   In addition, the present invention is directed to:
[10] a highly refractory rubber composition sheet containing (A) a polyhydric alcohol, (B) a nitrogen-containing foaming agent, (C) a rubber substance, (D) a flame resistant foaming agent and (E) titanium dioxide,
   the above-mentioned rubber substance (C) comprises at least one selected from the group consisting of a butyl rubber, a polybutene and a petroleum resin,
   a total amount of the above-mentioned flame resistant foaming agent (D) and titanium dioxide (E) is in the range of 100 to 240 parts by weight based on 100 parts by weight of the above-mentioned rubber substance (C),
   a weight ratio [(D)/(E)] of the above-mentioned flame resistant foaming agent (D) and titanium dioxide (E) is in the range of 1.5 to 5.
   Furthermore, one of the present inventions is directed to:
[11] the highly refractory rubber composition sheet described in the above-mentioned any one of [1], [3], [4], [5], [7], [8] and [9], which is a highly refractory rubber composition sheet containing (A) a polyhydric alcohol, (B) a nitrogen-containing foaming agent, (C) a rubber substance, (D) a flame resistant foaming agent and (E) titanium dioxide, wherein
   the above-mentioned rubber substance (C) comprises at least one selected from the group consisting of a butyl rubber, a polybutene and a petroleum resin,
   a total amount of the above-mentioned flame resistant foaming agent (D) and titanium dioxide (E) is in the range of 100 to 240 parts by weight based on 100 parts by weight of the above-mentioned rubber substance (C),
   a weight ratio [(D)/(E)] of the above-mentioned flame resistant foaming agent (D) and titanium dioxide (E) is in the range of 1.5 to 5.

### EFFECTS OF THE INVENTION

The highly refractory rubber composition sheet according to the present invention contains, as mentioned above, (A) a polyhydric alcohol, (B) a nitrogen-containing foaming agent, (C) a rubber substance, (D) a flame resistant foaming agent and (E) titanium dioxide, wherein a content of the above-mentioned nitrogen-containing foaming agent (B) is within the range of 76 to 80 parts by weight based on 100 parts by weight of the above-mentioned rubber substance (C).

According to the above formulation, it can retain a certain shape until it forms a thermal expansion residue by heat of the fire, etc., give firm and strong thermal expansion residue formed by heat of the fire, etc., and does not peel off and fall away from building materials such as a steel frame, etc., and can prevent from penetration of the flame for at least 2 hours when it is exposed to the flame of the fire, etc., so that it is excellent in fire resistance for a long period of time.

Also, when the highly refractory rubber composition sheet according to the present invention is a highly refractory rubber composition sheet containing, as mentioned above, (A) a polyhydric alcohol, (B) a nitrogen-containing foaming agent, (C) a rubber substance, (D) a flame resistant foaming agent and (E) titanium dioxide, wherein the above-mentioned rubber substance (C) comprises at least one selected from the group consisting of a butyl rubber, a polybutene and a petroleum resin, a total of the above-mentioned flame resistant foaming agent (D) and titanium dioxide (E) is in the range of 100 to 240 parts by weight based on 100 parts by weight of the above-mentioned rubber substance (C), and a weight ratio [(D)/(E)] of the above-mentioned flame resistant foaming agent (D) and titanium dioxide (E) is in the range of 1.5 to 5, it is excellent in fire resistance for a long period of time.

More specifically, it can retain a certain shape until it forms a thermal expansion residue by heat of the fire, etc., the thermal expansion residue formed by heat of the fire, etc., does not easily peeled off from the building materials such as a steel frame, etc., as well as it can prevent from penetration of the flame for at least 2 hours when it is exposed to the flame of the fire, etc., so that it is excellent in fire resistance for a long period of time.

Further, since the highly refractory rubber composition sheet according to the present invention contains a rubber substance (C), it has flexibility. Thus, even if a curved surface, a part of corner, etc., exist at the steel frame, etc., it is possible to mount a highly refractory rubber composition sheet on the above-mentioned building materials within a short period of time while maintaining a constant thickness. Therefore, fire resistance of the building materials such as a steel frame, etc., can be easily heightened.

### EMBODIMENT TO CARRY OUT THE INVENTION

The highly refractory rubber composition sheet according to the present invention is a material formed by a highly refractory rubber composition comprising (A) a polyhydric alcohol, (B) a nitrogen-containing foaming agent, (C) a rubber substance, (D) a flame resistant foaming agent and (E) titanium dioxide, and the polyhydric alcohol (A) to be used in the present invention is firstly explained.

The above-mentioned polyhydric alcohol (A) may be mentioned, for example, pentaerythritol, dipentaerythritol, tripentaerythritol, polypentaerythritol, etc.

The above-mentioned polyhydric alcohol (A) may be used a single kind or two or more kinds in combination.

An amount of the above-mentioned polyhydric alcohol (A) contained in the highly refractory rubber composition to be used in the present invention is in the range of 60 to 90 parts by weight based on 100 parts by weight of the above-mentioned rubber substance (C).

If the amount of the above-mentioned polyhydric alcohol (A) to be used based on the above-mentioned rubber substance (C) is in the range of 60 to 90 parts by weight, when the above-mentioned highly refractory rubber composition is exposed to the heat of the fire, etc., a firm and strong thermal expansion residue is formed.

The amount of the above-mentioned polyhydric alcohol (A) to be used is preferably in the range of 60 to 75 parts by weight, more preferably in the range of 62 to 65 parts by weight.

Next, the nitrogen-containing foaming agent (B) is explained.

The above-mentioned nitrogen-containing foaming agent (B) may be mentioned, for example, dicyandiamide, azodicarbonamide, urea, guanidine, melamine, a melamine derivative, etc.

The above-mentioned melamine derivative may be mentioned, for example, trimethylol melamine, hexamethylol melamine, etc., which are obtained by reacting melamine and formaldehyde, etc.

Since the thermal expansion residue formed by heat of the fire, etc., is firm and strong, at least one of dicyandiamide and melamine is preferably used, and both of dicyandiamide and melamine are more preferably used.

The above-mentioned nitrogen-containing foaming agent (B) may be used a single kind or two or more kinds in combination.

An amount of the above-mentioned nitrogen-containing foaming agent (B) to be contained in the highly refractory rubber composition to be used in the present invention is preferably in the range of 76 to 80 parts by weight based on 100 parts by weight of the above-mentioned rubber substance (C) .

If the range of the above-mentioned nitrogen-containing foaming agent (B) to the above-mentioned rubber substance (C) is 76 to 80 parts by weight, when the above-mentioned highly refractory rubber composition is exposed to the heat of the fire, etc., a thermal expansion residue which is firm and strong is formed, and it can prevent from penetration of the flame for at least 2 hours when the sheet is exposed to the flame of the fire, etc., of the highly refractory rubber composition.

Also, when both of the dicyandiamide and the melamine are used, the above-mentioned dicyandiamide is preferably within the range of 10 to 20 parts by weight based on 100 parts by weight of the above-mentioned rubber substance (C), and the above-mentioned melamine is preferably within the range of 56 to 70 parts by weight based on 100 parts by weight of the above-mentioned rubber substance (C), since the above-mentioned highly refractory rubber composition forms a further firm and strong thermal expansion residue when it is exposed to the heat of the fire, etc.

The above-mentioned dicyandiamide is more preferably within the range of 17 to 20 parts by weight, and the above-mentioned melamine is more preferably within the range of 56 to 63 parts by weight.

Next, the rubber substance (C) is explained.

The rubber substance (C) to be used in the present invention may be mentioned, for example, a rubber component such as natural rubber, isoprene rubber, butyl rubber, polybutene rubber, polybutadiene rubber, nitrile rubber, acryl rubber, urethane rubber, ethylene-propylene rubber, chlorosulfonylated polyethylene rubber, chloroprene rubber, styrene-butadiene rubber, polyfluorinated ethylene rubber, silicone rubber, etc.

The highly refractory rubber composition sheet according to the present invention has flexibility since it contains the above-mentioned rubber substance (C). To make the above-mentioned highly refractory rubber composition sheet hard, there may be mentioned the methods of enlarging the molecular weight of the above-mentioned rubber component, optionally selecting the kind thereof, etc.

The above-mentioned rubber substance (C) may be used a single kind or two or more kinds in combination.

In addition, the above-mentioned rubber substance (C) may further contain a plasticizer, a tackifier, etc., in addition to the above-mentioned rubber component.

The above-mentioned plasticizer is not particularly limited, and may be mentioned, for example, hydrocarbons, phthalic acids, phosphoric acid esters, adipic acid esters, sebacic acid esters, ricinoleic acid esters, polyesters, epoxy compounds, chlorinated paraffins, etc.

The above-mentioned tackifier is not particularly limited, and there may be mentioned, for example, rosin resins, rosin derivatives, dammar, polyterpene resins, terpene modified products, aliphatic hydrocarbon resins, cyclopentadiene resins, aromatic petroleum resins, phenol resins, alkylphenol-acetylene resins, styrene resins, xylene resins, coumarone-indene resins, vinyl toluene-α-methylstyrene copolymers, etc.

The above-mentioned rubber substance (C) is preferably at least one selected from the group consisting of a butyl rubber, a polybutene and a petroleum resin.

The highly refractory rubber composition sheet according to the present invention has flexibility since it contains the above-mentioned rubber substance (C). To make the above-mentioned highly refractory rubber composition sheet hard, there may be mentioned the methods of enlarging the molecular weight of the above-mentioned rubber component, optionally selecting the kind thereof, etc.

Also, it is used in combination with the above-mentioned respective components, the above-mentioned highly refractory rubber composition forms a firm and strong thermal expansion residue when it is exposed to the heat of the fire, etc., as well as it can prevent from penetration of the flame for at least 2 hours when it is exposed to the flame of the fire, etc., so that it is preferred since it is excellent in fire resistance for a long period of time.

The above-mentioned petroleum resin may be mentioned, for example, a resin obtained by polymerizing fractions contained in cracked petroleum which by-produce by steam cracking of petroleum, i.e., aromatic fractions, and the like.

The above-mentioned petroleum resin may be hydrogen added, or may not be hydrogen added, and either of which can be optionally selected and used.

By using the above-mentioned petroleum resin, tackiness can be provided to the highly refractory rubber composition. According to this, when the highly refractory rubber composition sheet is to be mounted, a temporary fastening operation, etc., becomes easy so that it can be easily handled.

The above-mentioned petroleum resin may be used a single kind or two or more kinds in combination.

The above-mentioned rubber substance (C) is preferably used that comprising a butyl rubber and a polybutene, or that comprising a butyl rubber, a polybutene and a petroleum resin.

When an example of the formulation ratio of the above-mentioned butyl rubber and the polybutene is mentioned, based on the total weight of the above-mentioned butyl rubber and polybutene as 100 parts by weight, the above-mentioned butyl rubber is preferably in the range of 80 to 20 parts by weight, and the above-mentioned polybutene is preferably in the range of 20 to 80 parts by weight, since the resulting highly refractory rubber composition sheet is excellent in flexibility and handling property.

Also, when an example of the formulation ratio of the above-mentioned butyl rubber, polybutene and petroleum resin is mentioned, based on the total amount thereof as 100 parts by weight, the above-mentioned butyl rubber is preferably in the range of 15 to 65 parts by weight, the above-mentioned polybutene is preferably in the range of 20 to 80 parts by weight, and the above-mentioned petroleum resin is preferably in the range of 5 to 15 parts by weight, since flexibility and handling property of the resulting highly refractory rubber composition sheet are excellent while maintaining adhesiveness thereof.

Next, the flame resistant foaming agent (D) is explained.

The above-mentioned flame resistant foaming agent (D) may be mentioned, for example, red phosphorus,
phosphoric acid salts such as sodium phosphate, potassium phosphate, magnesium phosphate, ammonium phosphate, etc.,
ammonium polyphosphates such as ammonium polyphosphate, melamine-modified ammonium polyphosphate, etc., and
phosphoric acid esters represented by the following chemical formula, etc.

These phosphorus compounds may be used a single kind or two or more kinds in combination.

Among these, in the viewpoint of fire resistance, red phosphorus, phosphoric acid esters represented by the following chemical formula, and ammonium polyphosphates are preferred, and ammonium polyphosphates are more preferred in the points of performance, safety, cost, etc.

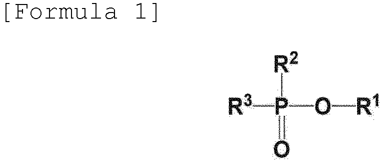

@0001 In the above-mentioned chemical formula, R¹ and R³ each represent hydrogen, a linear or branched alkyl group having 1 to 16 carbon atoms, or an aryl group having 6 to 16 carbon atoms.

R² represents a hydroxyl group, a linear or branched alkyl group having 1 to 16 carbon atoms, a linear or branched alkoxyl group having 1 to 16 carbon atoms, an aryl group having 6 to 16 carbon atoms or an aryloxy group having 6 to 16 carbon atoms.

As the compound represented by the above-mentioned chemical formula, there may be mentioned, for example, methylphosphonic acid, dimethyl methylphosphonate, diethyl methylphosphonate, ethyl phosphonic acid, propylphosphonic acid, butylphosphonic acid, 2-methylpropylphosphonic acid, t-butylphosphonic acid, 2,3-dimethylbutylphosphonic acid, octylphosphonic acid, phenylphosphonic acid, dioctylphenyl-phosphonate, dimethylphosphinic acid, methylethylphosphinic acid, methylpropylphosphinic acid, diethylphosphinic acid, dioctylphosphinic acid, phenylphosphinic acid, diethyl-phenylphosphinic acid, diphenylphosphinic acid, bis(4-methoxyphenyl)phosphinic acid, etc.

Above all, whereas the t-butylphosphonic acid is expensive, it is preferred in the point of highly flame resistance.

The ammonium polyphosphates are not particularly limited, and may be mentioned, for example, ammonium polyphosphate, melamine-modified ammonium polyphosphate, etc., and ammonium polyphosphate is suitably used in the points of flame resistance, safety, cost, handling property, etc.

Next, titanium dioxide (E) is explained.

An average particle diameter of the above-mentioned titanium dioxide (E) is preferably in the range of 0.01 to 500 µm, more preferably in the range of 0.1 to 200 µm. Also, it is more preferred to use an inorganic filler having a larger average particle diameter and that having a smaller average particle diameter in combination. According to such a combination, it is possible to highly pack the material while maintaining the mechanical characteristics of the sheet state molding material.

Next, a formulation of the highly refractory rubber composition to be used in the present invention is explained. A total amount of the above-mentioned flame resistant foaming agent (D) and titanium dioxide (E) to be contained in the highly refractory rubber composition which is to be used in the present invention is preferably in the range of 100 to 240 parts by weight based on 100 parts by weight of the rubber substance (C).

If the total amount of the above-mentioned flame resistant foaming agent (D) and titanium dioxide (E) to be used based on the rubber substance (C) is 100 to 240 parts by weight, when the above-mentioned highly refractory rubber composition is exposed to the heat of the fire, etc., it can retain a certain shape until it forms a thermal expansion residue by the heat of the fire, etc., and a firm and strong thermal expansion residue can be formed.

Also, a weight ratio [(D)/(E)] of the above-mentioned flame resistant foaming agent (D) and the titanium dioxide (E) contained in the highly refractory rubber composition to be used in the present invention is preferably in the range of 1.5 to 5.

If the weight ratio of the above-mentioned flame resistant foaming agent (D) and the titanium dioxide (E) is in the range of 1.5 to 5, when the above-mentioned highly refractory rubber composition is exposed to the heat of the fire, etc., a firm and strong thermal expansion residue can be formed.

Further, to the highly refractory rubber composition to be used in the present invention may be added, depending on necessity, each within the range which does not impair the objects of the present invention, an inorganic filler, a plasticizer, an antioxidant such as a phenol series, amine series, sulfur series, etc., as well as additives such as a metal damage preventing agent, an additive including an antistatic agent, a stabilizer, a cross-linking agent, a lubricant, a processing aid, a softening agent, a pigment, etc.

The above-mentioned inorganic filler may be mentioned, for example, inorganic salts such as calcium carbonate, aluminum hydroxide, magnesium hydroxide, etc.,
oxidated inorganic materials such as glass flake, boehmite, wollastonite, etc.,
inorganic fibers such as rock wool fibers, glass fiber, ceramic fiber, silica fiber, carbon fiber, etc.,
fine particle inorganic materials such as carbon, fumed silica, etc.

The above-mentioned inorganic fibers may be either of short fiber or long fiber, and both of which can be used.

The above-mentioned boehmite is preferably a needle, squamous or platy shape. Also, the above-mentioned wollastonite is preferably a needle shape.

The above-mentioned plasticizer may be mentioned, for example, a phthalic acid ester such as diethyl phthalate, dibutylphthalate, etc., phosphoric acid esters, aliphatic acid esters, epoxy series plasticizers, etc.

The above-mentioned plasticizer may be used a single kind or two or more kinds in combination.

The above-mentioned antioxidant may be mentioned, for example, antioxidants containing a phenol compound, antioxidants containing a sulfur atom, antioxidants containing a phosphite compound, etc.

The above-mentioned antioxidant may be used a single kind or two or more kinds in combination.

The above-mentioned metal damage preventing agent may be mentioned, for example, methylbenzotriazole, etc.

The above-mentioned metal damage preventing agent may be used a single kind or two or more kinds in combination.

The above-mentioned antistatic agent may be mentioned, for example, N,N-bis(hydroxyethyl)alkylamine, alkylallylsulfonate, alkylsulfonate, etc.

The above-mentioned antistatic agent may be used a single kind or two or more kinds in combination.

The above-mentioned stabilizer may be mentioned, for example, a lead heat stabilizer such as tribasic lead sulfate, tribasic lead sulfite, dibasic lead phosphite, lead stearate, dibasic lead stearate, etc.,
an organic tin heat stabilizer such as organic tin mercapto, organic tin maleate, organic tin laurate, dibutyl tin maleate, etc., and
a metal soap heat stabilizer such as zinc stearate, calcium stearate, etc.

The above-mentioned heat stabilizer may be used a single kind or two or more kinds in combination.

The above-mentioned cross-linking agent may be mentioned, for example, an organic peroxide, sulfur, a sulfur compound, etc., and an organic peroxide is preferred.

The above-mentioned organic peroxide may be mentioned, for example, diisopropylbenzene hydroperoxide, 2,4-dichlorobenzoyl peroxide, benzoyl peroxide, t-butyl perbenzoate, cumyl hydroperoxide, t-butyl hydroperoxide, 1,1-di(t-butylperoxy)-3,3,5-trimethylhexane, n-butyl-4,4-di(t-butylperoxy)valerate, α,α'-bis(t-butylperoxyisopropyl)benzene, 2,5-dimethyl-2,5-di(t-butylperoxy)hexyne-3, t-butylperoxycumene, etc.

The above-mentioned sulfur compound may be mentioned, for example, tetramethylthiuram disulfide, tetramethylthiuram monosulfide, zinc dimethyldithiocarbamate, 2-mercaptobenzothiazole, dibenzothiazyl disulfide, N-cyclohexyl-2-benzothiazole sulfenamide, N-t-butyl-2-benzothiazole sulfenamide, sulfur monochloride, sulfur dichloride, etc.

The above-mentioned cross-linking agent may be used a single kind or two or more kinds in combination.

The above-mentioned lubricant may be mentioned, for example, waxes such as polyethylene, paraffin, montanoic acid, etc.,
waxes such as tall oil, sub-oil, bees wax, carnauba wax, lanolin, etc.,
ester waxes,
organic acids such as stearic acid, palmitic acid, ricinoleic acid, etc.,
organic alcohols such as stearyl alcohol, etc., and
amide series compounds such as dimethyl bisamide, etc.

The above-mentioned lubricant may be used a single kind or two or more kinds in combination.

The above-mentioned processing aid may be mentioned, for example, chlorinated polyethylene, methyl methacrylate-ethyl acrylate copolymer, high molecular weight polymethyl methacrylate, etc.

The above-mentioned processing aid may be used a single kind or two or more kinds in combination.

The above-mentioned softening agent may be mentioned, for example, animal and vegetable oils such as linseed oil, etc., coal tar series softening agents such as coal tar, coal tar pitch, etc., aliphatic oil type softening agents such as castor oil, linseed oil, rapeseed oil, coconut oil, etc., aliphatic acids such as ricinoleic acid, palmitic acid, stearic acid, etc., aliphatic acid esters such as phthalic acid esters, etc.

The above-mentioned softening agent may be used a single kind or two or more kinds in combination.

The above-mentioned pigment may be mentioned, for example, organic pigments such as azo compounds, phthalocyanine compounds, selenium compounds, dye lake compounds, etc., and inorganic pigments such as oxides, molybdenum chromates, sulfide·selenides, ferrocyanates, etc.

The above-mentioned pigment may be used a single kind or two or more kinds in combination.

Next, a method for manufacturing the above-mentioned highly refractory rubber composition is explained.

A method for manufacturing the above-mentioned highly refractory rubber composition is not particularly limited, and the above-mentioned highly refractory rubber composition can be obtained by, for example, the method in which the respective components of the above-mentioned highly refractory rubber composition are fed to a kneading apparatus such as an extruder, a banbury mixer, a kneader mixer, etc., to carry out melting and kneading, the method in which the respective components of the above-mentioned highly refractory rubber composition are suspended in an organic solvent or melted by heating to prepare a paint state material or dispersed in a solvent to prepare a slurry, etc.

The above-mentioned highly refractory rubber composition sheet according to the invention can be obtained by using the above-mentioned highly refractory rubber composition in which the above-mentioned respective components have been kneaded by using a conventionally known kneading apparatus such as a banbury mixer, a kneader mixer, a twin roll, etc., and molding into a sheet state by the conventionally known molding method such as a heat press molding, an extrusion molding, a calendar molding, etc.

The above-mentioned highly refractory rubber composition is not particularly limited so long as it can insulating heat by forming a thermal expansion residue when it is exposed to a high temperature such as the fire, etc., and the thermal expansion residue has a strength, and preferably a material in which a coefficient of volume expansion after heating in an electric furnace set at 600°C for 30 minutes of 3 to 100-fold.

If the above-mentioned coefficient of volume expansion exceeds 3-fold, the expanded volume can sufficiently fill up the burned down portion of the above-mentioned rubber substance whereby the fire protecting performance becomes good. Also, if it is 100-fold or less, the strength of the thermal expansion residue can be maintained, and an effect of preventing penetration of flame is improved. The coefficient of volume expansion is more preferably in the range of 5 to 80-fold, further preferably in the range of 8 to 60-fold.

To establish the above-mentioned thermal expansion residue itself, the above-mentioned thermal expansion residue is required to have large strength, and as the strength, it is preferred that a stress at rupture is 0.05 kgf/cm² or more, which is measured by pressing a sample of the above-mentioned thermal expansion residue using a probe of 0.25 cm² with a compression rate of 0.1 m/s by a compression test apparatus. If the stress at rupture exceeds 0.05 kgf/cm², an adiabatic expansion layer establishes itself and the fire protecting performance is improved. It is more preferably 0.1 kgf/cm² or more.

When the above-mentioned highly refractory rubber composition is molded to a sheet shape, an organic material layer, an inorganic material layer, a metal layer, etc., may be laminated.

Specific examples of the organic materials to be used in the above-mentioned an organic material layer may be mentioned, for example, polyolefin resins such as a polyethylene resin, a polypropylene resin, a polybutene resin, a polypentene resin, etc.,
polystyrene resins such as a polystyrene resin, a poly-α-methylstyrene resin, etc.,
polyester resins such as a polyethylene terephthalate resin, a polybutylene terephthalate resin, a polycarbonate resin, etc.,
polyamide resins such as a polyurethane resin, a polyamide resin, etc.,
ether series resins such as a polyphenylene ether resin, etc.,
unsaturated ester resins such as an acrylic resin, etc.,
copolymer resins such as an ABS resin, an ethylene-vinyl acetate copolymer, an ethylene-vinyl alcohol copolymer, a styrene-butadiene copolymer, etc.,
novolac resins such as an epoxy resin, a phenol resin, etc., and
halogen resins such as a fluorinated resin, a polyvinyl chloride resin, etc.

A shape of the above-mentioned an organic material layer may be mentioned, for example, a film molded to a planar shape, a woven fabric using the above-mentioned organic material, a non-woven fabric using the above-mentioned organic material, etc.

The above-mentioned film molded to a planar shape can be obtained by the method such as extrusion molding, press molding, etc., of the above-mentioned organic series material.

The above-mentioned organic material may be used a single kind or two or more kinds in combination.

Specific examples of the metal to be used in the above-mentioned metal layer may be mentioned, for example, iron, steel, stainless, zinc-plated steel, aluminum-zinc alloy-plated steel, aluminum, etc.

As the above-mentioned metal layer, a metal plate having a thickness of thicker than 500 µm, a metal foil having a thickness of 500 µm or less, etc., may be used.

The above-mentioned metal layer is preferably an aluminum foil, etc., in the point of handling property, which is preferably provided at the outermost surface of the above-mentioned highly refractory rubber composition sheet.

The above-mentioned metal may be used a single kind or two or more kinds in combination.

Specific examples of the inorganic material to be used in the above-mentioned inorganic material layer may be mentioned, for example, inorganic fibers such as rock wool, glass wool, ceramic wool, etc.

A shape of the above-mentioned an inorganic material layer may be mentioned, for example, a woven fabric using the above-mentioned inorganic material, a non-woven fabric using the above-mentioned inorganic material, etc.

The above-mentioned inorganic material may be employed a single kind or two or more kinds in combination.

Next, specific constitution of the highly refractory rubber composition sheet according to the present invention is explained.

Specific examples of the highly refractory rubber composition sheet according to the present invention may be mentioned, for example, a sheet comprising the highly refractory rubber composition, and in the order of the above-mentioned metal foil, the above-mentioned organic series material sheet, etc., are laminated thereon.

A specific example thereof may be mentioned as follows:
(a) 1. A metal foil layer, 2. A highly refractory rubber composition layer
(b) 1. A metal foil layer, 2. An inorganic material layer, 3. A highly refractory rubber composition layer
(c) 1. An organic material layer, 2. A metal foil layer, 3. An inorganic material layer, 4. A highly refractory rubber composition layer
(d) 1. A metal foil layer, 2. An inorganic material layer, 3. A highly refractory rubber composition layer, 4. An inorganic material layer, 5. A metal foil layer

Those in which the respective layers are laminated in the order of any of the above-mentioned (a) to (d), etc., may be mentioned.

An order of laminating the organic material layer, the inorganic material layer, the metal layer, etc., and a thickness of the respective layers, etc., to be used in the present invention are not particularly limited, and these can be optionally selected depending on the place of use, the object, etc., of the highly refractory rubber composition sheet according to the present invention.

Also, a thickness of the above-mentioned highly refractory rubber composition layer is not particularly limited, and is preferably in the range of 0.1 to 10 mm in the point of handling property, more preferably in the range of 0.2 to 10 mm, further preferably in the range of 0.5 to 5 mm.

Next, the present invention is explained in detail by referring to Examples. Incidentally, the present invention is not limited by these Examples.

### Example 1

According to the formulation described in Table 1, a highly refractory rubber composition in which 63 parts by weight of pentaerythritol as the polyhydric alcohol (A), 57 parts by weight of melamine and 19 parts by weight of dicyandiamide as the nitrogen-containing foaming agents (B), 42 parts by weight of a butyl rubber, 50 parts by weight of a polybutene and 8 parts by weight of a petroleum resin as the rubber substances (C), 126 parts by weight of ammonium polyphosphate as the flame resistant foaming agent (D), and 73 parts by weight of titanium dioxide (E) have been formulated were kneaded by a heating roller.

Incidentally, the details of the respective components used are as follows.
- Butyl rubber: available from JSR Corporation, trade name: JSR065
- Polybutene: available from JX Nippon Oil & Energy Corporation, trade name: HV100
- Petroleum resin: available from Idemitsu Kosan Co., Ltd., trade name: IMARV P125
- Melamine: available from Nissan Chemical Industries, Ltd., trade name: melamine
- Dicyandiamide: available from Nippon Carbide Industries Co., Inc., trade name: dicyandiamide
- Ammonium polyphosphate (APP): available from Clariant Japan K.K., trade name: AP422
- Pentaerythritol: available from Koei Chemical Co., Ltd., trade name: Pentarit
- Titanium dioxide (TiO₂): available from Sakai Chemical Industry Co., Ltd., trade name: SA-1, anatase type titanium dioxide particles, average particle diameter: 0.15 µm, specific surface area: 9.7 m²/g.

Incidentally, an average particle diameter of titanium dioxide can be measured by a commercially available measurement device utilizing laser diffraction/scattering method particle size distribution measurement, etc.

Next, on both surfaces of the kneaded highly refractory rubber composition were each laminated an aluminum foil-laminated glass cloth so that the aluminum foil became the outermost surface, respectively, and the laminated material was molded by using a heat pressing machine set at 100°C to obtain a highly refractory rubber composition sheet.

A thickness of the resin portion of the obtained highly refractory rubber composition sheet was 1 mm. Next, on a plate made of iron having a length of 200 mm, a width of 200 mm and a thickness of 0.5 mm was placed the highly refractory rubber composition sheet having a length of 200 mm, a width of 200 mm and a thickness of the resin portion of 1 mm.

Next, the edges of the above-mentioned plate made of iron and the above-mentioned highly refractory rubber composition sheet were fixed by using a ceramic blanket.

A thermocouple was attached at the positions of 50 mm upside and downside from the center of the back surface of the above-mentioned plate made of iron at which the above-mentioned highly refractory rubber composition sheet has been placed.

To the side at which the above-mentioned highly refractory rubber composition sheet has been placed, a fire resistance test for 2 hours was carried out according to the conditions of ISO834.

Incidentally, the evaluation method of the fire resistance test is as follows.

[Heat insulation property] : After 2 hours from starting the fire resistance test, the case where the maximum temperature at the back surface of the plate made of iron had been lower than 450°C was judged as a mark of a double circle, the case where it had been 450 to 550°C was judged as a mark of a circle, and the case where it had exceeded 550°C was judged as x.

[Shape holding property] : After 2 hours from starting the fire resistance test, heating was stopped and the plate was cooled to room temperature by allowing to stand, aluminum foil-laminated glass cloths at both surfaces of the thermal expansion residue of the highly refractory rubber composition sheet were removed, and the state of the thermal expansion residue was observed. The case where the thermal expansion residue had retained the shape and had not been collapsed was judged as a mark of a double circle, the case where partial collapse had been observed at the thermal expansion residue but could be used was judged as a mark of a circle, and the case where the thermal expansion residue had collapsed and could not be used was judged as ×.

The results are shown in Table 1.

As shown in Table 1, the highly refractory rubber composition sheet obtained in Example 1 showed excellent fire resistance and shape holding property of the thermal expansion residue.

### Example 2

In the case of Example 1, the fire resistance test was carried out in completely the same manner as in Example 1 except that 140 parts by weight of ammonium polyphosphate was used as the flame resistant foaming agent (D) and 35 parts by weight of titanium dioxide (E) was used.

The results are shown in Table 1.

As shown in Table 1, the highly refractory rubber composition sheet obtained in Example 2 showed excellent fire resistance and shape holding property of the thermal expansion residue.

### Example 3

In the case of Example 1, the fire resistance test was carried out in completely the same manner as in Example 1 except that 175 parts by weight of ammonium polyphosphate was used as the flame resistant foaming agent (D) and 35 parts by weight of titanium dioxide (E) was used.

The results are shown in Table 1.

As shown in Table 1, the highly refractory rubber composition sheet obtained in Example 3 showed excellent fire resistance and shape holding property of the thermal expansion residue.

### Example 4

In the case of Example 1, the fire resistance test was carried out in completely the same manner as in Example 1 except that 183 parts by weight of ammonium polyphosphate was used as the flame resistant foaming agent (D) and 52 parts by weight of titanium dioxide (E) was used.

The results are shown in Table 1.

As shown in Table 1, the highly refractory rubber composition sheet obtained in Example 4 showed excellent fire resistance and shape holding property of the thermal expansion residue.

### Example 5

In the case of Example 1, the fire resistance test was carried out in completely the same manner as in Example 1 except that 120 parts by weight of ammonium polyphosphate was used as the flame resistant foaming agent (D) and 30 parts by weight of titanium dioxide (E) was used.

The results are shown in Table 1.

As shown in Table 1, the highly refractory rubber composition sheet obtained in Example 5 showed excellent fire resistance and shape holding property of the thermal expansion residue.

### Example 6

In the case of Example 1, the fire resistance test was carried out in completely the same manner as in Example 1 except that 102 parts by weight of ammonium polyphosphate was used as the flame resistant foaming agent (D) and 23 parts by weight of titanium dioxide (E) was used.

The results are shown in Table 1.

As shown in Table 1, the highly refractory rubber composition sheet obtained in Example 6 showed excellent fire resistance and shape holding property of the thermal expansion residue.

### Example 7

In the case of Example 1, the fire resistance test was carried out in completely the same manner as in Example 1 except that 80 parts by weight of ammonium polyphosphate was used as the flame resistant foaming agent (D) and 45 parts by weight of titanium dioxide (E) was used.

The results are shown in Table 1.

As shown in Table 1, the highly refractory rubber composition sheet obtained in Example 7 showed excellent fire resistance and shape holding property of the thermal expansion residue.

### Example 8

In the case of Example 1, the fire resistance test was carried out in completely the same manner as in Example 1 except that 126 parts by weight of ammonium polyphosphate was used as the flame resistant foaming agent (D) and 42 parts by weight of titanium dioxide (E) was used.

The results are shown in Table 1.

As shown in Table 1, the highly refractory rubber composition sheet obtained in Example 8 showed excellent fire resistance and shape holding property of the thermal expansion residue.

### Example 9

In the case of Example 1, the fire resistance test was carried out in completely the same manner as in Example 1 except that 120 parts by weight of ammonium polyphosphate was used as the flame resistant foaming agent (D) and 20 parts by weight of titanium dioxide (E) was used.

The results are shown in Table 2.

As shown in Table 2, the highly refractory rubber composition sheet obtained in Example 9 showed excellent fire resistance and shape holding property of the thermal expansion residue.

### Example 10

In the case of Example 1, the fire resistance test was carried out in completely the same manner as in Example 1 except that 200 parts by weight of ammonium polyphosphate was used as the flame resistant foaming agent (D) and 50 parts by weight of titanium dioxide (E) was used.

The results are shown in Table 2.

As shown in Table 2, the highly refractory rubber composition sheet obtained in Example 10 showed excellent fire resistance and shape holding property of the thermal expansion residue.

### Example 11

In the case of Example 1, the fire resistance test was carried out in completely the same manner as in Example 1 except that 250 parts by weight of ammonium polyphosphate was used as the flame resistant foaming agent (D) and 50 parts by weight of titanium dioxide (E) was used.

The results are shown in Table 2.

As shown in Table 2, the highly refractory rubber composition sheet obtained in Example 11 showed excellent fire resistance and shape holding property of the thermal expansion residue.

### Example 12

In the case of Example 1, the fire resistance test was carried out in completely the same manner as in Example 1 except that 195 parts by weight of ammonium polyphosphate was used as the flame resistant foaming agent (D) and 35 parts by weight of titanium dioxide (E) was used.

The results are shown in Table 2.

As shown in Table 2, the highly refractory rubber composition sheet obtained in Example 12 showed excellent fire resistance and shape holding property of the thermal expansion residue.

### Example 13

In the case of Example 1, the fire resistance test was carried out in completely the same manner as in Example 1 except that 156 parts by weight of ammonium polyphosphate was used as the flame resistant foaming agent (D) and 104 parts by weight of titanium dioxide (E) was used.

The results are shown in Table 2.

As shown in Table 2, the highly refractory rubber composition sheet obtained in Example 13 showed excellent fire resistance and shape holding property of the thermal expansion residue.

### Example 14

In the case of Example 1, the fire resistance test was carried out in completely the same manner as in Example 1 except that 126 parts by weight of ammonium polyphosphate was used as the flame resistant foaming agent (D) and 42 parts by weight of titanium dioxide (E) was used.

The results are shown in Table 2.

As shown in Table 2, the highly refractory rubber composition sheet obtained in Example 14 showed excellent fire resistance and shape holding property of the thermal expansion residue.

### Example 15

In the case of Example 1, the fire resistance test was carried out in completely the same manner as in Example 1 except that 42 parts by weight of titanium dioxide (E) was used.

Also, an average value of the Mooney viscosity of the highly refractory rubber composition used in Example 15 was 58(1+4) 50°C.

An average value of the remained weight after heating of the highly refractory rubber composition used in Example 15 was 45.9%.

Incidentally, the evaluation methods of Mooney viscosity and remained weight after heating are as follows.

[Mooney viscosity] : By using a Mooney viscometer manufactured by Toyo Seiki Seisaku-sho Ltd., measurement was carried out in accordance with JISK6300-1. As the rotor, an L type-shaped material was used, and the measurement was carried out by subjecting preheating for 1 minute, and rotating the rotor for 4 minutes at the test temperature of 50°C. Incidentally, the shape of the tie is a rectangular groove. The values measured three times were each shown in Table 2.

[Remained weight after heating]: The highly refractory rubber composition was molded into a sheet with 98 mm×98 mm×1 mm, and heated in an electric furnace at 600°C for 30 minutes. The weight before the heating was made A₁, the weight after heating was made A₂, and the value of (A₂/A₁) ×100 was shown as the remained weight (%) after the heating. The values measured three times were each shown in Table 3.

As shown in Table 3, the highly refractory rubber composition sheet obtained in Example 15 showed excellent fire resistance and shape holding property of the thermal expansion residue.

### Example 16

In the case of Example 1, the fire resistance test was carried out in completely the same manner as in Example 1 except that 45.7 parts by weight of the butyl rubber and 54.3 parts by weight of the polybutene were used as the rubber substance (C), without using the petroleum resin, and 42 parts by weight of titanium dioxide (E) was used.

Also, measurements of Mooney viscosity and the remained weight after heating were carried out under the same conditions as in Example 15.

An average value of the Mooney viscosity was 63ML(1+4)50°C. An average value of the remained weight after heating was 46.1%.

The results are shown in Table 3.

As shown in Table 3, the highly refractory rubber composition sheet obtained in Example 10 showed excellent fire resistance and shape holding property of the thermal expansion residue.

### [Comparative examples 1 to 9]

In the case of Example 1, the fire resistance test was carried out in completely the same manner as in Example 1 except that the used amounts of the flame resistant foaming agent (D) and titanium dioxide (E) were changed to those shown in Table 4.

The results are shown in Table 4.

In either of the cases, after 2 hours from starting the fire resistance test, the back surface temperature of the iron plate exceeded 550°C, and the thermal expansion residues could not retain the shape except for Comparative examples 6 and 7.

**[Table 1]**

| | | Example 1 | Example 2 | Example 3 | Example 4 | Example 5 | Example 6 | Example 7 | Example 8 |
|---|---|---|---|---|---|---|---|---|---|
| a rubber substance | butyl rubber | 42 | 42 | 42 | 42 | 42 | 42 | 42 | 42 |
| | polybutene | 50 | 50 | 50 | 50 | 50 | 50 | 50 | 50 |
| | petroleum resin | 8 | 8 | 8 | 8 | 8 | 8 | 8 | 8 |
| a nitrogen-containing foaming agent | melamine | 57 | 57 | 57 | 57 | 57 | 57 | 57 | 57 |
| | dicyanediamide | 19 | 19 | 19 | 19 | 19 | 19 | 19 | 19 |
| a phosphorus compound | ammonium polyphosphate | 126 | 140 | 175 | 183 | 120 | 102 | 80 | 126 |
| a polyhydric alcohol | pentaerythritol | 63 | 63 | 63 | 63 | 63 | 63 | 63 | 63 |
| inorganic fillers | titanium dioxide | 73 | 35 | 35 | 52 | 30 | 23 | 45 | 42 |
| | calcium carbonate | - | - | - | - | - | - | - | - |
| | zinc oxide | - | - | - | - | - | - | - | - |
| | iron oxide | - | - | - | - | - | - | - | - |
| | APP/TiO₂ ratio | 1.7 | 4.0 | 5.0 | 3.5 | 4.0 | 4.4 | 1.8 | 3.0 |
| | APP+TiO₂ weight | 199 | 175 | 210 | 235 | 150 | 125 | 125 | 168 |
| | heat insulation property (max temperature of back side of iron plate) | ⊚ | ⊚ | ⊚ | ⊚ | ⊚ | ⊚ | ⊚ | ⊚ |
| | shape holding property | ⊚ | ⊚ | ⊚ | ⊚ | ⊚ | ⊚ | ⊚ | ⊚ |

**[Table 2]**

| | | Example 9 | Example 10 | Example 11 | Example 12 | Example 13 | Example 14 |
|---|---|---|---|---|---|---|---|
| a rubber substance | butyl rubber | 42 | 42 | 42 | 42 | 42 | 42 |
| | polybutene | 50 | 50 | 50 | 50 | 50 | 50 |
| | petroleum resin | 8 | 8 | 8 | 8 | 8 | 8 |
| a nitrogen-containing foaming | melamine dicyanediamide | 57 | 57 | 57 | 57 | 57 | 60 |
| | dicyandiamide | 19 | 19 | 19 | 19 | 19 | 20 |
| a phosphorus compound | ammonium polyphosphate | 120 | 200 | 250 | 195 | 156 | 126 |
| a alcohol | pentaerythritol | 63 | 63 | 63 | 63 | 63 | 63 |
| inorganic fillers | titanium dioxide | 20 | 50 | 50 | 35 | 104 | 42 |
| | calcium carbonate | - | - | - | - | - | - |
| | zinc oxide | - | - | - | - | - | - |
| | iron oxide | - | - | - | - | - | - |
| | APP/TiO₂ ratio | 0.3 | 0.3 | 0.3 | 0.3 | 0.3 | 0.3 |
| | APP+TiO₂ weight | 82 | 82 | 82 | 82 | 82 | 83 |
| | heat insulation property (max temperature of back side of iron plate) | ○ | ○ | ○ | ○ | ○ | ⊚ |
| | shape holding property | ⊚ | ⊚ | ○ | ⊚ | ⊚ | ⊚ |

**[Table 3]**

| | | | Example 15 | Example 16 |
|---|---|---|---|---|
| a rubber substance | butyl rubber | | 42 | 45.7 |
| | polybutene | | 50 | 54.3 |
| | petroleum resin | | 8 | - |
| a nitrogen-containing foaming agent | melamine | | 57 | 57 |
| | dicyanediamide | | 19 | 19 |
| a phosphorus compound | ammonium polyphosphate | | 126 | 126 |
| a polyhydric alcohol | pentaerythritol | | 63 | 63 |
| inorganic fillers | titanium dioxide | | 42 | 42 |
| | APP/TiO₂ ratio | | 3.0 | 3.0 |
| | APP+TiO₂ number of weight | | 168 | 168 |
| | heat insulation property (max temperature of back side of iron plate) | | ⊚ | ⊚ |
| | shape holdingproperty | | ⊚ | ⊚ |
| | Mooney viscosity | n1 | 58.1 | 62.6 |
| | | n2 | 58.1 | 62.7 |
| | | n3 | 58.2 | 62.7 |
| | remaining weight/% | n1 | 46.2 | 46.3 |
| | | n2 | 45.8 | 46.2 |
| | | n3 | 45.7 | 45.9 |

**[Table 4]**

| | | Comparative example1 | Comparative example2 | Comparative example3 | Comparative example4 | Comparative example5 | Comparative example6 | Comparative example7 | Comparative example8 | Comparative example9 |
|---|---|---|---|---|---|---|---|---|---|---|
| a rubber substance | butyl rubber | 42 | 42 | 42 | 42 | 42 | 42 | 42 | 42 | 42 |
| | polybutene | 50 | 50 | 50 | 50 | 50 | 50 | 50 | 50 | 50 |
| | petroleum resin | 8 | 8 | 8 | 8 | 8 | 8 | 8 | 8 | 8 |
| a nitrogen- containing foaming | melamine | 57 | 57 | 57 | 57 | 57 | 57 | 57 | 55 | 60 |
| | dicyanediamide | 19 | 19 | 19 | 19 | 19 | 19 | 19 | 15 | 25 |
| a phosphorus compound | ammonium polyphosphate | 126 | 126 | 126 | 126 | 126 | 126 | 126 | 126 | 126 |
| a polyhydric alcohol | pentaerythritol | 63 | 63 | 63 | 63 | 63 | 63 | 63 | 63 | 63 |
| inorganic fillers | titanium dioxide | - | - | - | - | - | - | - | 5 | 10 |
| | calcium carbonate | 42 | - | - | - | - | - | - | - | - |
| | zinc oxide | - | 42 | - | - | 20 | 35 | 50 | - | - |
| | iron oxide | - | 42 | 42 | - | - | - | - | - | - |
| | aluminium hydroxide | - | - | | 42.0 | - | - | - | - | - |
| | APP/TiO₂ ratio | - | - | - | - | - | - | - | 25.2 | 12.6 |
| | APP+TiO₂ weight | - | - | - | - | - | - | - | 131 | 136 |
| | heat insulation property (max temperature of back side of iron plate) | × | × | × | × | × | × | × | × | ○ |
| | shape holding property | × | × | × | × | × | ○ | ⊚ | × | × |

### INDUSTRIAL APPLICABILITY

The highly refractory rubber composition sheet according to the present invention shows excellent fire resistance and shape holding property of thermal expansion residue, so that it can be widely used as a material for improving fire resistance property of building materials such as a steel frame, an outer wall, a partition, a fire shutter, a refractory duct, etc.

## Claims

1. A highly refractory rubber composition sheet, which is formed by a highly refractory rubber composition containing (A) a polyhydric alcohol, (B) a nitrogen-containing foaming agent, (C) a rubber substance, (D) a flame resistant foaming agent and (E) titanium dioxide,
wherein the above-mentioned nitrogen-containing foaming agent (B) is contained in a range of 76 to 80 parts by weight based on 100 parts by weight of the above-mentioned rubber substance (C).

2. The highly refractory rubber composition sheet according to claim 1, wherein the above-mentioned rubber substance (C) comprises a butyl rubber and a polybutene, or the rubber substance (C) comprises a butyl rubber, a polybutene and a petroleum resin.

3. The highly refractory rubber composition sheet according to claim 2, wherein the above-mentioned polyhydric alcohol (A) is contained in a range of 60 to 90 parts by weight based on 100 parts by weight of the above-mentioned rubber substance (C).

4. The highly refractory rubber composition sheet according to claim 3, wherein the above-mentioned polyhydric alcohol (A) is at least one selected from the group consisting of pentaerythritol, dipentaerythritol, tripentaerythritol and polypentaerythritol,
the above-mentioned nitrogen-containing foaming agent (B) is at least one selected from the group consisting of dicyandiamide, azodicarbonamide, urea, guanidine, melamine and a melamine derivative,
the above-mentioned flame resistant foaming agent (D) is at least one selected from the group consisting of red phosphorus, phosphoric acid salts, phosphoric acid esters and ammonium polyphosphates.

5. The highly refractory rubber composition sheet according to claim 4, wherein the above-mentioned nitrogen-containing foaming agent (B) is dicyandiamide and melamine,
the above-mentioned dicyandiamide is contained in the range of 10 to 20 parts by weight based on 100 parts by weight of the above-mentioned rubber substance (C), and
the above-mentioned melamine is contained in the range of 56 to 70 parts by weight based on 100 parts by weight of the above-mentioned rubber substance (C).

6. The highly refractory rubber composition sheet according to claim 5, wherein a total amount of the above-mentioned flame resistant foaming agent (D) and titanium dioxide (E) is within the range of 100 to 240 parts by weight based on 100 parts by weight of the above-mentioned rubber substance (C), and
a weight ratio [(D)/(E)] of the above-mentioned flame resistant foaming agent (D) and titanium dioxide (E) is in the range of 1.5 to 5.

7. The highly refractory rubber composition sheet according to claim 6, wherein the above-mentioned rubber substance (C) comprises a butyl rubber, a polybutene and a petroleum resin,
based on the total weight of the above-mentioned butyl rubber, polybutene and petroleum resin as 100 parts by weight,
the above-mentioned butyl rubber is in the range of 15 to 65 parts by weight,
the above-mentioned polybutene is in the range of 20 to 80 parts by weight, and
the above-mentioned petroleum resin is in the range of 5 to 15 parts by weight.

8. The highly refractory rubber composition sheet according to claim 7, wherein the above-mentioned highly refractory rubber composition contains at least one selected from the group consisting of an inorganic filler, a plasticizer, an antioxidant, a metal damage preventing agent, an antistatic agent, a stabilizer, a cross-linking agent, a lubricant, a processing aid, a softening agent and a pigment.

9. The highly refractory rubber composition sheet according to claim 6, wherein at least one selected from the group consisting of an organic material layer, an inorganic material layer and a metal layer is laminated on the highly refractory rubber composition layer formed by the above-mentioned highly refractory rubber composition.

10. The highly refractory rubber composition sheet according to claim 7, wherein at least one selected from the group consisting of an organic material layer, an inorganic material layer and a metal layer is laminated on the highly refractory rubber composition layer formed by the above-mentioned highly refractory rubber composition.

11. The highly refractory rubber composition sheet according to claim 8, wherein at least one selected from the group consisting of an organic material layer, an inorganic material layer and a metal layer is laminated on the highly refractory rubber composition layer formed by the above-mentioned highly refractory rubber composition.

12. A highly refractory rubber composition sheet containing (A) a polyhydric alcohol, (B) a nitrogen-containing foaming agent, (C) a rubber substance, (D) a flame resistant foaming agent and (E) titanium dioxide,
the above-mentioned rubber substance (C) comprises a butyl rubber and a polybutene, or the rubber substance (C) comprises a butyl rubber, a polybutene and a petroleum resin,
a total amount of the above-mentioned flame resistant foaming agent (D) and titanium dioxide (E) is in the range of 100 to 240 parts by weight based on 100 parts by weight of the above-mentioned rubber substance (C),
a weight ratio [(D)/(E)] of the above-mentioned flame resistant foaming agent (D) and titanium dioxide (E) is in the range of 1.5 to 5.

13. The highly refractory rubber composition sheet according to claim 1, a highly refractory rubber composition sheet containing (A) a polyhydric alcohol, (B) a nitrogen-containing foaming agent, (C) a rubber substance, (D) a flame resistant foaming agent and (E) titanium dioxide,
the above-mentioned rubber substance (C) comprises a butyl rubber and a polybutene, or the rubber substance (C) comprises a butyl rubber, a polybutene and a petroleum resin,
a total amount of the above-mentioned flame resistant foaming agent (D) and titanium dioxide (E) is in the range of 100 to 240 parts by weight based on 100 parts by weight of the above-mentioned rubber substance (C),
a weight ratio [(D)/(E)] of the above-mentioned flame resistant foaming agent (D) and titanium dioxide (E) is in the range of 1.5 to 5.

14. The highly refractory rubber composition sheet according to claim 3, a highly refractory rubber composition sheet containing (A) a polyhydric alcohol, (B) a nitrogen-containing foaming agent, (C) a rubber substance, (D) a flame resistant foaming agent and (E) titanium dioxide,
the above-mentioned rubber substance (C) comprises a butyl rubber and a polybutene, or the rubber substance (C) comprises a butyl rubber, a polybutene and a petroleum resin,
a total amount of the above-mentioned flame resistant foaming agent (D) and titanium dioxide (E) is in the range of 100 to 240 parts by weight based on 100 parts by weight of the above-mentioned rubber substance (C),
a weight ratio [(D)/(E)] of the above-mentioned flame resistant foaming agent (D) and titanium dioxide (E) is in the range of 1.5 to 5.

15. The highly refractory rubber composition sheet according to claim 4, a highly refractory rubber composition sheet containing (A) a polyhydric alcohol, (B) a nitrogen-containing foaming agent, (C) a rubber substance, (D) a flame resistant foaming agent and (E) titanium dioxide,
the above-mentioned rubber substance (C) comprises a butyl rubber and a polybutene, or the rubber substance (C) comprises a butyl rubber, a polybutene and a petroleum resin,
a total amount of the above-mentioned flame resistant foaming agent (D) and titanium dioxide (E) is in the range of 100 to 240 parts by weight based on 100 parts by weight of the above-mentioned rubber substance (C),
a weight ratio [(D)/(E)] of the above-mentioned flame resistant foaming agent (D) and titanium dioxide (E) is in the range of 1.5 to 5.

16. The highly refractory rubber composition sheet according to claim 7, a highly refractory rubber composition sheet containing (A) a polyhydric alcohol, (B) a nitrogen-containing foaming agent, (C) a rubber substance, (D) a flame resistant foaming agent and (E) titanium dioxide,
the above-mentioned rubber substance (C) comprises a butyl rubber, a polybutene and a petroleum resin,
a total amount of the above-mentioned flame resistant foaming agent (D) and titanium dioxide (E) is in the range of 100 to 240 parts by weight based on 100 parts by weight of the above-mentioned rubber substance (C),
a weight ratio [(D)/(E)] of the above-mentioned flame resistant foaming agent (D) and titanium dioxide (E) is in the range of 1.5 to 5.

17. The highly refractory rubber composition sheet according to claim 8, a highly refractory rubber composition sheet containing (A) a polyhydric alcohol, (B) a nitrogen-containing foaming agent, (C) a rubber substance, (D) a flame resistant foaming agent and (E) titanium dioxide,
the above-mentioned rubber substance (C) comprises a butyl rubber, a polybutene and a petroleum resin,
a total amount of the above-mentioned flame resistant foaming agent (D) and titanium dioxide (E) is in the range of 100 to 240 parts by weight based on 100 parts by weight of the above-mentioned rubber substance (C),
a weight ratio [(D)/(E)] of the above-mentioned flame resistant foaming agent (D) and titanium dioxide (E) is in the range of 1.5 to 5.

18. The highly refractory rubber composition sheet according to claim 9, a highly refractory rubber composition sheet containing (A) a polyhydric alcohol, (B) a nitrogen-containing foaming agent, (C) a rubber substance, (D) a flame resistant foaming agent and (E) titanium dioxide,
the above-mentioned rubber substance (C) comprises a butyl rubber and a polybutene, or the rubber substance (C) comprises a butyl rubber, a polybutene and a petroleum resin,
a total amount of the above-mentioned flame resistant foaming agent (D) and titanium dioxide (E) is in the range of 100 to 240 parts by weight based on 100 parts by weight of the above-mentioned rubber substance (C),
a weight ratio [(D)/(E)] of the above-mentioned flame resistant foaming agent (D) and titanium dioxide (E) is in the range of 1.5 to 5.

## Patentansprüche

1. Hochfeuerfeste Kautschukzusammensetzungsfolie, welche aus einer hochfeuerfesten Kautschukzusammensetzung gebildet ist, enthaltend (A) einen mehrwertigen Alkohol, (B) ein stickstoffhaltiges Schäumungsmittel, (C) eine Kautschuksubstanz, (D) ein flammfestes Schäumungsmittel und (E) Titandioxid,
wobei das vorgenannte stickstoffhaltige Schäumungsmittel (B) in einem Bereich von 76 bis 80 Gewichtsteilen, basierend auf 100 Gewichtsteilen der vorgenannten Kautschuksubstanz (C), enthalten ist.

2. Hochfeuerfeste Kautschukzusammensetzungsfolie nach Anspruch 1, wobei die vorgenannte Kautschuksubstanz (C) einen Butylkautschuk und eine Polybuten umfasst, oder die Kautschuksubstanz (C) einen Butylkautschuk, ein Polybuten und ein Erdölharz umfasst.

3. Hochfeuerfeste Kautschukzusammensetzungsfolie nach Anspruch 2, wobei der vorgenannte mehrwertige Alkohol (A) in einem Bereich von 60 bis 90 Gewichtsteilen, basierend auf 100 Gewichtsteilen der vorgenannten Kautschuksubstanz (C), enthalten ist.

4. Hochfeuerfeste Kautschukzusammensetzungsfolie nach Anspruch 3, wobei der vorgenannte mehrwertige Alkohol (A) mindestens einer ist, gewählt aus der Gruppe, bestehend aus Pentaerythritol, Dipentaerythritol, Tripentaerythritol und Polypentaerythritol,
das vorgenannte stickstoffhaltige Schäumungsmittel (B) mindestens eines ist, gewählt aus der Gruppe, bestehend aus Dicyandiamid, Azodicarbonamid, Harnstoff, Guanidin, Melamin und einem Melaminderivat,
das vorgenannte flammfeste Schäumungsmittel (D) mindestens eines ist, gewählt aus der Gruppe, bestehend aus rotem Phosphor, Phosphorsäuresalzen, Phosphorsäureestern und Ammoniumpolyphosphaten.

5. Hochfeuerfeste Kautschukzusammensetzungsfolie nach Anspruch 4, wobei das vorgenannte stickstoffhaltige Schäumungsmittel (B) Dicyandiamid und Melamin ist,
das vorgenannte Dicyandiamid in dem Bereich von 10 bis 20 Gewichtsteilen, basierend auf 100 Gewichtsteilen der vorgenannten Kautschuksubstanz (C), enthalten ist, und
das vorgenannte Melamin in dem Bereich von 56 bis 70 Gewichtsteilen, basierend auf 100 Gewichtsteilen der vorgenannten Kautschuksubstanz (C), enthalten ist.

6. Hochfeuerfeste Kautschukzusammensetzungsfolie nach Anspruch 5, wobei eine Gesamtmenge des vorgenannten flammfesten Schäumungsmittels (D) und Titandioxid (E) innerhalb des Bereichs von 100 bis 240 Gewichtsteilen, basierend auf 100 Gewichtsteilen der vorgenannten Kautschuksubstanz (C), beträgt, und
ein Gewichtsverhältnis [(D)/(E)] des vorgenannten flammfesten Schäumungsmittels (D) und Titandioxid (E) in dem Bereich von 1,5 bis 5 liegt.

7. Hochfeuerfeste Kautschukzusammensetzungsfolie nach Anspruch 6, wobei die vorgenannte Kautschuksubstanz (C) einen Butylkautschuk, ein Polybuten und ein Erdölharz umfasst,
basierend auf dem Gesamtgewicht des vorgenannten Butylkautschuks, Polybutens und Erdölharzes als 100 Gewichtsteile,
der vorgenannte Butylkautschuk in dem Bereich von 15 bis 65 Gewichtsteilen vorliegt,
das vorgenannte Polybuten in dem Bereich von 20 bis 80 Gewichtsteilen vorliegt, und
das vorgenannte Erdölharz in dem Bereich von 5 bis 15 Gewichtsteilen vorliegt.

8. Hochfeuerfeste Kautschukzusammensetzungsfolie nach Anspruch 7, wobei die vorgenannte hochfeuerfeste Kautschukzusammensetzung mindestens eines enthält, gewählt aus der Gruppe, bestehend aus einem anorganischen Füllstoff, einem Weichmacher, einem Antioxidationsmittel, einem Metallschaden verhindernden Mittel, einem Antistatikmittel, einen Stabilisator, einem Vernetzungsmittel, einem Gleitmittel, einer Verarbeitungshilfe, einem Weichmacher und einem Pigment.

9. Hochfeuerfeste Kautschukzusammensetzungsfolie nach Anspruch 6, wobei mindestens eines, gewählt aus der Gruppe, bestehend aus einer organischen Materialschicht, einer anorganischen Materialschicht und einer Metallschicht, auf der hochfeuerfesten Kautschukzusammensetzungsschicht, gebildet aus der vorgenannten hochfeuerfesten Kautschukzusammensetzung, laminiert ist.

10. Hochfeuerfeste Kautschukzusammensetzungsfolie nach Anspruch 7, wobei mindestens eines, gewählt aus der Gruppe, bestehend aus einer organischen Materialschicht, einer anorganischen Materialschicht und eine Metallschicht, auf der hochfeuerfesten Kautschukzusammensetzungsschicht, gebildet aus der vorgenannten hochfeuerfesten Kautschukzusammensetzung, laminiert ist.

11. Hochfeuerfeste Kautschukzusammensetzungsfolie nach Anspruch 8, wobei mindestens eines, gewählt aus der Gruppe, bestehend aus einer organischen Materialschicht, einer anorganischen Materialschicht und einer Metallschicht, auf der hochfeuerfesten Kautschukzusammensetzungsschicht, gebildet aus der vorgenannten hochfeuerfesten Kautschukzusammensetzung, laminiert ist.

12. Hochfeuerfeste Kautschukzusammensetzungsfolie, enthaltend (A) einen mehrwertigen Alkohol, (B) ein stickstoffhaltiges Schäumungsmittel, (C) eine Kautschuksubstanz, (D) ein flammfestes Schäumungsmittel und (E) Titandioxid,
wobei die vorgenannte Kautschuksubstanz (C) einen Butylkautschuk und ein Polybuten umfasst, oder die Kautschuksubstanz (C) einen Butylkautschuk, ein Polybuten und ein Erdölharz umfasst,
eine Gesamtmenge des vorgenannten flammfesten Schäumungsmittels (D) und Titandioxid (E) in dem Bereich von 100 bis 240 Gewichtsteilen, basierend auf 100 Gewichtsteilen der vorgenannten Kautschuksubstanz (C), liegt,
ein Gewichtsverhältnis [(D)/(E)] des vorgenannten flammfesten Schäumungsmittels (D) und Titandioxid (E) in dem Bereich von 1,5 bis 5 liegt.

13. Hochfeuerfeste Kautschukzusammensetzungsfolie nach Anspruch 1, wobei eine hochfeuerfeste Kautschukzusammensetzungsfolie (A) einen mehrwertigen Alkohol, (B) ein stickstoffhaltiges Schäumungsmittel, (C) eine Kautschuksubstanz, (D) ein flammfestes Schäumungsmittel und (E) Titandioxid enthält,
die vorgenannte Kautschuksubstanz (C) einen Butylkautschuk und ein Polybuten umfasst, oder die Kautschuksubstanz (C) einen Butylkautschuk, ein Polybuten und Erdölharz umfasst,
eine Gesamtmenge des vorgenannten flammfesten Schäumungsmittels (D) und Titandioxid (E) in dem Bereich von 100 bis 240 Gewichtsteilen, basierend auf 100 Gewichtsteilen der vorgenannten Kautschuksubstanz (C), liegt,
ein Gewichtsverhältnis [(D)/(E)] des vorgenannten flammfesten Schäumungsmittels (D) und Titandioxid (E) in dem Bereich von 1,5 bis 5 liegt.

14. Hochfeuerfeste Kautschukzusammensetzungsfolie nach Anspruch 3, wobei eine hochfeuerfeste Kautschukzusammensetzungsfolie (A) einen mehrwertigen Alkohol, (B) ein stickstoffhaltiges Schäumungsmittel, (C) eine Kautschuksubstanz, (D) ein flammfestes Schäumungsmittel und (E) Titandioxid enthält,
die vorgenannte Kautschuksubstanz (C) einen Butylkautschuk und ein Polybuten umfasst, oder die Kautschuksubstanz (C) einen Butylkautschuk, ein Polybuten und ein Erdölharz umfasst,
eine Gesamtmenge des vorgenannten flammfesten Schäumungsmittels (D) und Titandioxid (E) in dem Bereich von 100 bis 240 Gewichtsteilen, basierend auf 100 Gewichtsteilen der vorgenannten Kautschuksubstanz (C), liegt,
ein Gewichtsverhältnis [(D)/(E)] des vorgenannten flammfesten Schäumungsmittels (D) und Titandioxid (E) in dem Bereich von 1,5 bis 5 liegt.

15. Hochfeuerfeste Kautschukzusammensetzungsfolie nach Anspruch 4, wobei eine hochfeuerfeste Kautschukzusammensetzungsfolie (A) einen mehrwertigen Alkohol, (B) ein stickstoffhaltiges Schäumungsmittel, (C) eine Kautschuksubstanz, (D) ein flammfestes Schäumungsmittel und (E) Titandioxid enthält,
die vorgenannte Kautschuksubstanz (C) einen Butylkautschuk und ein Polybuten umfasst, oder die Kautschuksubstanz (C) einen Butylkautschuk, ein Polybuten und ein Erdölharz umfasst,
eine Gesamtmenge des vorgenannten flammfesten Schäumungsmittels (D) und Titandioxid (E) in dem Bereich von 100 bis 240 Gewichtsteilen, basierend auf 100 Gewichtsteilen der vorgenannten Kautschuksubstanz (C), liegt,
ein Gewichtsverhältnis [(D)/(E)] des vorgenannten flammfesten Schäumungsmittels (D) und Titandioxid (E) in dem Bereich von 1,5 bis 5 liegt.

16. Hochfeuerfeste Kautschukzusammensetzungsfolie nach Anspruch 7, wobei eine hochfeuerfeste Kautschukzusammensetzungsfolie (A) einen mehrwertigen Alkohol, (B) ein stickstoffhaltiges Schäumungsmittel, (C) eine Kautschuksubstanz, (D) ein flammfestes Schäumungsmittel und (E) Titandioxid enthält,
die vorgenannte Kautschuksubstanz (C) einen Butylkautschuk, ein Polybuten und ein Erdölharz umfasst,
eine Gesamtmenge des vorgenannten flammfesten Schäumungsmittels (D) und Titandioxid (E) in dem Bereich von 100 bis 240 Gewichtsteilen, basierend auf 100 Gewichtsteilen der vorgenannten Kautschuksubstanz (C), liegt,
ein Gewichtsverhältnis [(D)/(E)] des vorgenannten flammfesten Schäumungsmittels (D) und Titandioxid (E) in dem Bereich von 1,5 bis 5 liegt.

17. Hochfeuerfeste Kautschukzusammensetzungsfolie nach Anspruch 8, wobei eine hochfeuerfeste Kautschukzusammensetzungsfolie (A) einen mehrwertigen Alkohol, (B) ein stickstoffhaltiges Schäumungsmittel, (C) eine Kautschuksubstanz, (D) ein flammfestes Schäumungsmittel und (E) Titandioxid enthält,
die vorgenannte Kautschuksubstanz (C) einen Butylkautschuk, ein Polybuten und ein Erdölharz umfasst,
eine Gesamtmenge des vorgenannten flammfesten Schäumungsmittels (D) und Titandioxid (E) in dem Bereich von 100 bis 240 Gewichtsteilen, basierend auf 100 Gewichtsteilen der vorgenannten Kautschuksubstanz (C), liegt,
ein Gewichtsverhältnis [(D)/(E)] des vorgenannten flammfesten Schäumungsmittels (D) und Titandioxid (E) in dem Bereich von 1,5 bis 5 liegt.

18. Hochfeuerfeste Kautschukzusammensetzungsfolie nach Anspruch 9, wobei eine hochfeuerfeste Kautschukzusammensetzungsfolie (A) einen mehrwertigen Alkohol, (B) ein stickstoffhaltiges Schäumungsmittel, (C) eine Kautschuksubstanz, (D) ein flammfestes Schäumungsmittel und (E) Titandioxid enthält,
die vorgenannte Kautschuksubstanz (C) einen Butylkautschuk und ein Polybuten umfasst, oder die Kautschuksubstanz (C) einen Butylkautschuk, ein Polybuten und ein Erdölharz umfasst,
eine Gesamtmenge des vorgenannten flammfesten Schäumungsmittels (D) und Titandioxid (E) in dem Bereich von 100 bis 240 Gewichtsteilen, basierend auf 100 Gewichtsteilen der vorgenannten Kautschuksubstanz (C), liegt,
ein Gewichtsverhältnis [(D)/(E)] des vorgenannten flammfesten Schäumungsmittels (D) und Titandioxid (E) in dem Bereich von 1,5 bis 5 liegt.

## Revendications

1. Une feuille de composition de caoutchouc hautement réfractaire, qui est formée par une composition de caoutchouc hautement réfractaire contenant (A) un alcool polyhydrique, (B) un agent moussant contenant de l'azote, (C) une matière de caoutchouc, (D) un agent moussant résistant au feu et (E) du dioxyde de titane,
dans laquelle l'agent moussant (B) contenant de l'azote mentionné ci-dessus est contenu dans une gamme allant de 76 à 80 parties en poids sur la base de 100 parties en poids de la matière de caoutchouc (C) mentionnée ci-dessus.

2. La feuille de composition de caoutchouc hautement réfractaire selon la revendication 1, dans laquelle la matière de caoutchouc (C) mentionnée ci-dessus comprend un caoutchouc butylique et un polybutène, ou la matière de caoutchouc (C) comprend un caoutchouc butylique, un polybuène et une résine de pétrole.

3. La feuille de composition de caoutchouc hautement réfractaire selon la revendication 2, dans laquelle l'alcool polyhydrique (A) mentionné ci-dessus est contenu dans une gamme allant de 60 à 90 parties en poids sur la base de 100 parties en poids de la matière de caoutchouc (C) mentionnée ci-dessus.

4. La feuille de composition de caoutchouc hautement réfractaire selon la revendication 3, dans laquelle l'alcool polyhydrique (A) mentionné ci-dessus est au moins un choisi parmi le groupe constitué par le pentaérythritol, le dipentaérythritol, le tripentaérythritol et le polypentaérythritol,
l'agent moussant (B) contenant de l'azote mentionné ci-dessus est au moins un choisi parmi le groupe constitué par le dicyandiamide, l'azodicarbonamide, l'urée, la guanidine, le mélamine et un dérivé de mélamine,
l'agent moussant (D) résistant au feu mentionné ci-dessus est au moins un choisi parmi le groupe constitué par le phosphore rouge, les sels d'acide phosphorique, les esters d'acide phosphorique et les polyphosphates d'ammonium.

5. La feuille de composition de caoutchouc hautement réfractaire selon la revendication 4, dans laquelle l'agent moussant (B) contenant de l'azote mentionné ci-dessus est la dicyandiamide et la mélamine,
la dicyandiamide mentionée ci-dessus est contenue dans la gamme allant de 10 à 20 parties en poids sur la base de 100 parties en poids de la matière de caoutchouc (C) mentionnée ci-dessus, et
la mélamine mentionnée ci-dessus est contenue dans la gamme allant de 56 à 70 parties en poids sur la base de 100 parties en poids de la matière de caoutchouc (C) mentionnée ci-dessus.

6. La feuille de composition de caoutchouc hautement réfractaire selon la revendication 5, dans laquelle une quantité totale de l'agent moussant (D) résistant au feu et du dioxyde de titane (E) mentionnés ci-dessus est dans la gamme allant de 100 à 240 parties en poids sur la base de 100 parties en poids de la matière de caoutchouc (C) mentionnée ci-dessus, et
un rapport de poids [(D)/(E)] de l'agent moussant (D) résistant au feu et du dioxyde de titane (E) mentionnés ci-dessus est dans la gamme allant de 1,5 à 5.

7. La feuille de composition de caoutchouc hautement réfractaire selon la revendication 6, dans laquelle la matière de caoutchouc (C) mentionnée ci-dessus comprend un caoutchouc butylique, un polybutène et une résine de pétrole,
sur la base du poids total du caoutchouc butylique, du polybutène et de la résine de pétrole mentionnés ci-dessus en tant que 100 parties en poids,
le caoutchouc butylique mentionné ci-dessus est dans la gamme allant de 15 à 65 parties en poids,
le polybutène mentionné ci-dessus est dans la gamme allant de 20 à 80 parties en poids, et
la résine de pétrole mentionnée ci-dessus est dans la gamme allant de 5 à 15 parties en poids.

8. La feuille de composition de caoutchouc hautement réfractaire selon la revendication 7, dans laquelle la composition de caoutchouc hautement réfractaire mentionnée ci-dessus contient au moins un choisi parmi le groupe constitué par une charge inorganique, un plastifiant, un antioxydant, un agent empêchant la dégradation de métal, un agent antistatique, un stabilisateur, un agent réticulant, un lubrifiant, un agent auxiliaire de traitement, un agent adoucissant et un pigment.

9. La feuille de composition de caoutchouc hautement réfractaire selon la revendication 6, dans laquelle au moins une choisi parmi le groupe constitué par une couche de matériel organique, une couche de matériel inorganique et une couche de métal est laminé sur la couche de composition de caoutchouc hautement réfractaire formée par la composition de caoutchouc hautement réfractaire mentionnée ci-dessus.

10. La feuille de composition de caoutchouc hautement réfractaire selon la revendication 7, dans laquelle au moins une choisi parmi le groupe constitué par une couche de matériel organique, une couche de matériel inorganique et une couche de métal est laminé sur la couche de composition de caoutchouc hautement réfractaire formée par la composition de caoutchouc hautement réfractaire mentionnée ci-dessus.

11. La feuille de composition de caoutchouc hautement réfractaire selon la revendication 8, dans laquelle au moins une choisi parmi le groupe constitué par une couche de matériel organique, une couche de matériel inorganique et une couche de métal est laminé sur la couche de composition de caoutchouc hautement réfractaire formée par la composition de caoutchouc hautement réfractaire mentionnée ci-dessus.

12. Une feuille de composition de caoutchouc hautement réfractaire contenant (A), un alcool polyhydrique, (B) un agent moussant contenant de l'azote, (C) une matière de caoutchouc, (D) un agent moussant résistant au feu et (E) du dioxyde de titane,
la matière de caoutchouc (C) mentionnée ci-dessus comprend un caoutchouc butylique et un polybutène, ou la matière de caoutchouc (C) comprend un caoutchouc butylique, un polybutène et une résine de pétrole,
une quantité totale de l'agent moussant résistant au feu (D) et du dioxyde de titane (E) mentionnés ci-dessus est dans la gamme allant de 100 à 240 parties en poids sur la base de 100 parties en poids de la matière de caoutchouc (C) mentionnée ci-dessus,
un rapport de poids [(D)/(E)] de l'agent moussant résistant au feu (D) et du dioxyde de titane (E) mentionnés ci-dessus est dans la gamme allant de 1,5 à 5.

13. La feuille de composition de caoutchouc hautement réfractaire selon la revendication 1, une feuille de composition de caoutchouc hautement réfractaire contenant (A) un alcool polyhydrique, (B) un agent moussant contenant de l'azote, (C) une matière de caoutchouc, (D) un agent moussant résistant au feu et (E) du dioxyde de titane,
la matière de caoutchouc (C) mentionnée ci-dessus comprend un caoutchouc butylique et un polybutène, ou la matière de caoutchouc (C) comprend un caoutchouc butylique, un polybutène et une résine de pétrole,
une quantité totale de l'agent moussant résistant au feu (D) et du dioxyde de titane (E) mentionnés ci-dessus est dans la gamme allant de 100 à 240 parties en poids sur la base de 100 parties en poids de la matière de caoutchouc (C) mentionnée ci-dessus,
un rapport de poids [(D)/(E)] de l'agent moussant résistant au feu (D) et du dioxyde de titane (E) mentionnés ci-dessus est dans la gamme allant de 1,5 à 5.

14. La feuille de composition de caoutchouc hautement réfractaire selon la revendication 3, une feuille de composition de caoutchouc hautement réfractaire contenant (A) un alcool polyhydrique, (B) un agent moussant contenant de l'azote, (C) une matière de caoutchouc, (D) un agent moussant résistant au feu et (E) du dioxyde de titane,
la matière de caoutchouc (C) mentionnée ci-dessus comprend un caoutchouc butylique et un polybutène, ou la matière de caoutchouc (C) comprend un caoutchouc butylique, un polybutène et une résine de pétrole,
une quantité totale de l'agent moussant résistant au feu (D) et du dioxyde de titane (E) mentionnés ci-dessus est dans la gamme allant de 100 à 240 parties en poids sur la base de 100 parties en poids de la matière de caoutchouc (C) mentionnée ci-dessus,
un rapport de poids [(D)/(E)] de l'agent moussant résistant au feu (D) et du dioxyde de titane (E) mentionnés ci-dessus est dans la gamme allant de 1,5 à 5.

15. La feuille de composition de caoutchouc hautement réfractaire selon la revendication 4, une feuille de composition de caoutchouc hautement réfractaire contenant (A) un alcool polyhydrique, (B) un agent moussant contenant de l'azote, (C) une matière de caoutchouc, (D) un agent moussant résistant au feu et (E) du dioxyde de titane,
la matière de caoutchouc (C) mentionnée ci-dessus comprend un caoutchouc butylique et un polybutène, ou la matière de caoutchouc (C) comprend un caoutchouc butylique, un polybutène et une résine de pétrole,
une quantité totale de l'agent moussant résistant au feu (D) et du dioxyde de titane (E) mentionnés ci-dessus est dans la gamme allant de 100 à 240 parties en poids sur la base de 100 parties en poids de la matière de caoutchouc (C) mentionnée ci-dessus,
un rapport de poids [(D)/(E)] de l'agent moussant résistant au feu (D) et du dioxyde de titane (E) mentionnés ci-dessus est dans la gamme allant de 1,5 à 5.

16. La feuille de composition de caoutchouc hautement réfractaire selon la revendication 7, une feuille de composition de caoutchouc hautement réfractaire contenant (A) un alcool polyhydrique, (B) un agent moussant contenant de l'azote, (C) une matière de caoutchouc, (D) un agent moussant résistant au feu et (E) du dioxyde de titane,
la matière de caoutchouc (C) mentionnée ci-dessus comprend un caoutchouc butylique, un polybutène et une résine de pétrole,
une quantité totale de l'agent moussant résistant au feu (D) et du dioxyde de titane (E) mentionnés ci-dessus est dans la gamme allant de 100 à 240 parties en poids sur la base de 100 parties en poids de la matière de caoutchouc (C) mentionnée ci-dessus,
un rapport de poids [(D)/(E)] de l'agent moussant résistant au feu (D) et du dioxyde de titane (E) mentionnés ci-dessus est dans la gamme allant de 1,5 à 5.

17. La feuille de composition de caoutchouc hautement réfractaire selon la revendication 8, une feuille de composition de caoutchouc hautement réfractaire contenant (A) un alcool polyhydrique, (B) un agent moussant contenant de l'azote, (C) une matière de caoutchouc, (D) un agent moussant résistant au feu et (E) du dioxyde de titane,
la matière de caoutchouc (C) mentionnée ci-dessus comprend un caoutchouc butylique, un polybutène et une résine de pétrole,
une quantité totale de l'agent moussant résistant au feu (D) et du dioxyde de titane (E) mentionnés ci-dessus est dans la gamme allant de 100 à 240 parties en poids sur la base de 100 parties en poids de la matière de caoutchouc (C) mentionnée ci-dessus,
un rapport de poids [(D)/(E)] de l'agent moussant résistant au feu (D) et du dioxyde de titane (E) mentionnés ci-dessus est dans la gamme allant de 1,5 à 5.

18. La feuille de composition de caoutchouc hautement réfractaire selon la revendication 9, une feuille de composition de caoutchouc hautement réfractaire contenant (A) un alcool polyhydrique, (B) un agent moussant contenant de l'azote, (C) une matière de caoutchouc, (D) un agent moussant résistant au feu et (E) du dioxyde de titane,
la matière de caoutchouc (C) mentionnée ci-dessus comprend un caoutchouc butylique et un polybutène, ou la matière de caoutchouc (C) comprend un caoutchouc butylique, un polybutène et une résine de pétrole,
une quantité totale de l'agent moussant résistant au feu (D) et du dioxyde de titane (E) mentionnés ci-dessus est dans la gamme allant de 100 à 240 parties en poids sur la base de 100 parties en poids de la matière de caoutchouc (C) mentionnée ci-dessus,
un rapport de poids [(D)/(E)] de l'agent moussant résistant au feu (D) et du dioxyde de titane (E) mentionnés ci-dessus est dans la gamme allant de 1,5 à 5.
